# EUROPEAN PATENT SPECIFICATION

(11) **EP 1 144 285 B1**
(45) Date of publication and mention of the grant of the patent: **03.07.2002**
(21) Application number: 99963179.9
(22) Date of filing: 29.12.1999
(51) Int. Cl.: B65G 47/51, B65G 47/71

(54) **LOW PRESSURE DYNAMIC ACCUMULATION TABLE**
DYNAMISCHER STAUTISCH MIT NIEDRIGER AUFPRALLKRAFT
PLATEAU D'ACCUMULATION DYNAMIQUE BASSE PRESSION

(30) Priority: 18.01.1999 CA 2259816
(43) Date of publication of application: 17.10.2001
(73) Proprietor: Gebo Conveyors Consultants & Systems Inc., Laval, Quebec H7W 4V3 (CA)
(72) Inventor: PETROVIC, Zmaj, Westmount, Quebec H3Z 1J9 (CA)
(74) Representative: Rhein, Alain
(86) International application number: CA9901245
(87) International publication number: WO0041955

(56) References cited:
- US-A- 4 361 759
- US-A- 5 282 525
- US-A- 5 501 315

## Description

### FIELD OF THE INVENTION

The present invention relates to accumulation tables. More specifically, the present invention is concerned with a low pressure dynamic accumulation table.

### BACKGROUND OF THE INVENTION

Accumulators and accumulation tables are well known in the art of conveyors. Indeed, in production lines where the unfinished products are moved on conveyors from one production machine to another, means for accumulating the products between consecutive machines must often be installed since the production machines usually go at different speeds or may have to be momentarily stopped for maintenance.

Various types of accumulators have been proposed in the past. These accumulators may usually be classified as first in, last out (FILO) accumulators, where the first items stored exist last or as first in, first out (FIFO) accumulators where the first items stored exit first.

FILO accumulators are usually not well suited to accumulate food products since they present the disadvantage that they have to be emptied periodically to prevent products from staying accumulated for too long. These accumulators are therefore less commercially interesting since their use is limited.

FIFO accumulators are more interesting since they do not share the above noted drawback of FILO accumulators.

United States Patent N° 5,282,525, issued to William J. COVERT on February 1^{st}, 1994 and entitled: "Product Accumulator" describes an accumulator that may be viewed as a FIFO accumulator. A drawback of Covert's accumulator is that it must be kept reasonably short since it is not a low pressure accumulator. Indeed, since the conveyor belt always applies pressure onto the products accumulated, the number of products accumulated must be kept relatively low to prevent the accumulation pressure to reach a problematic level.

A further accumulator is known from United States Patent N° 4,361,759.

### OBJECTS OF THE INVENTION

An object of the present invention is therefore to provide an improved accumulation table.

### SUMMARY OF THE INVENTION

More specifically, in accordance with the present invention, there is provided a low pressure accumulation table for accumulating products; the accumulation table comprising:
a frame having a first end, a second end and two opposite lateral sides;
an inlet provided at the first end of the frame;
an outlet provided at the second end of the frame;
at least one feed conveyor so mounted to the frame as to convey products from the first end towards the second end of the frame; the at least one feed conveyor having a predetermined feed conveying speed;
at least two accumulation conveyors mounted to the frame; the at least one feed conveyor and the at least two accumulation conveyors defining an accumulation surface; the at least two accumulation conveyors having a variable accumulation conveying speed that is slower than the predetermined feed conveying speed;
wherein (a) the at least one feed conveyor and the at least two accumulation conveyors are so mounted side by side that the at least one feed conveyor alternate with the at least two accumulation conveyors; and (b) the at least two accumulation conveyors, when energized, convey the products from the accumulation surface towards the outlet at a rate which is a function of the variable accumulation conveying speed of the at least two accumulation conveyors.

It is to be understood that the term "conveyor" used in the present disclosure and in the appended claims should be construed as any type of conveying surface such as, for example, belt conveyors or adjacent chain conveyors running at the same speed.

Other objects, advantages and features of the present invention will become more apparent upon reading of the following non restrictive description of preferred embodiments thereof, given by way of example only with reference to the accompanying drawings.

### BRIEF DESCRIPTION OF THE DRAWINGS

In the appended drawings:
Figure 1 is a schematic top plan view of a low pressure dynamic accumulation table according to a first embodiment of the present invention;
Figure 2 is a schematic top plan view of a low pressure dynamic accumulation table according to a second embodiment of the present invention;
Figure 3 is a schematic top plan view of a low pressure dynamic accumulation table according to a third embodiment of the present invention;
Figure 4 is a schematic top plan view of a low pressure dynamic accumulation table according to a fourth embodiment of the present invention; and
Figure 5 is a schematic top plan view of a low pressure dynamic accumulation table according to a fifth embodiment of the present invention.

### DESCRIPTION OF THE PREFERRED EMBODIMENT

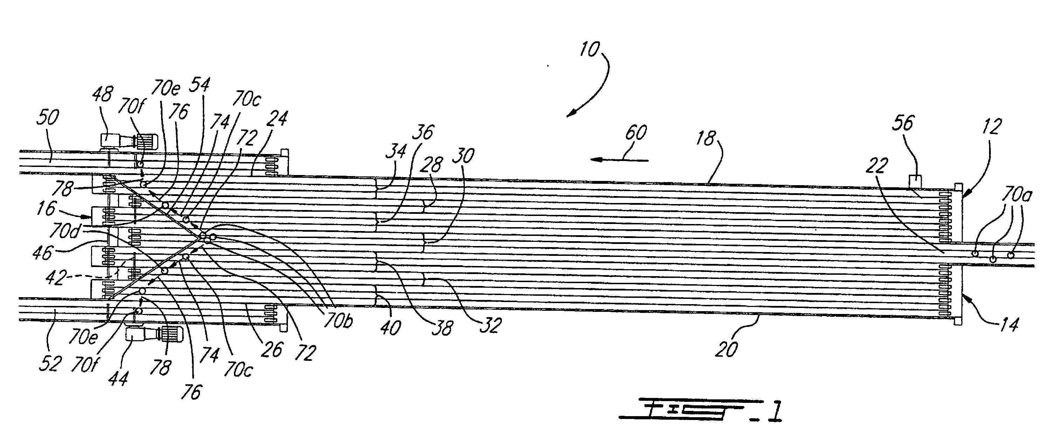

Turning now to Figure 1 of the appended drawings, a low pressure dynamic accumulation table 10 according to a first embodiment of the present invention will be described.

The accumulation table 10 includes a frame 12 having a first end 14 and a second end 16, opposite lateral sides 18 and 20, an inlet 22, first and second outlets 24 and 26, three feed conveyors 28, 30 and 32 and four accumulation conveyors 34, 36, 38 and 40.

The frame 12 is provided to adequately interconnect the various elements of the accumulation table 10 together and will not be further discussed herein.

The opposite lateral sides 18 and 20 may be provided with longitudinal guides (not shown) to prevent products to fall.

The conveyors 28, 30, 32, 34, 36, 38 and 40 are illustrated as containing two or three individual chain conveyors. However, as will be fully understood upon reading of the following description, the individual chain conveyors could be replaced by other types of conveyors having similar conveying width.

The sum of the individual width of the feed conveyors 28, 30 and 32 defines a combined feed conveying width while the sum of the width of the accumulation conveyors 34, 36, 38 and 40 defines a combined accumulation conveying width. The feed and accumulation conveyors 28, 30, 32, 34, 36, 38 and 40 together define an accumulation surface of the accumulation table 10.

As can be seen from this figure, the feed conveyors 28, 30 and 32 and the accumulation conveyors 34, 36, 38 and 40 are so mounted to the frame as to be side by side while the feed conveyors and the accumulation conveyors alternate.

The feed conveyors 28, 30 and 32 are connected to a common shaft 42 powered by a motor 44. Similarly, the accumulation conveyors 34, 36, 38 and 40 are connected to a common shaft 46 powered by a motor 48.

The motors 44 and 48 are controlled by an electronic circuit (not shown) that may independently adjust the feed conveying speed and the accumulation conveying speed according to the state of the production line. Of course, the electronic circuit is provided with manual overrides allowing a human operator to take control of the various functions of the accumulation table 10.

As will be apparent from the following description, the accumulation conveying speed is advantageously slower than the feed conveying speed.

Two output conveyors 50 and 52 are provided to convey the products away from the outlets 24 and 26 of the accumulation table 10 as will be described in details hereinafter. Of course, the output conveyors 50 and 52 are independently controlled by motors (not shown).

The accumulation table 10 also includes a generally triangular guide 54 that guides products towards the outlets 24 and 26 as will be described hereinbelow.

The table 10 is also optionally provided with a sensor 56 provided near the first end 14 of the frame 12 to detect when the accumulation table 10 is full, indicating that the motor 44 powering the feed conveyors 28, 30 and 32 should be stopped. Of course, other sensors (not shown) could be provided to indicate the state of accumulation of the accumulation table 10.

The operation of the accumulation table 10 will now be described. It is to be noted that in the following description of the operation of the accumulation table 10, the number of product shown on the accumulation table is reduced for clarity purposes.

Generally stated, the top surfaces of the feed conveyors 28, 30 and 32 are always in movement in the direction of arrow 60 at a variable feed conveying speed. Products entering the accumulation table 10 via the inlet 22 are therefore conveyed from the first end 14 towards the second end 16 of the accumulation table 10.

When the accumulation table 10 is in an accumulation mode, the accumulation conveyors 34, 36, 38 and 40 are not moving. The products will therefore accumulate onto the accumulation table 10 since the energy imparted to the products is not sufficient to push them across accumulation conveyors 34 or 40 to reach respective outlets 24 or 26.

When the accumulation table 10 is in a normal mode, the top surfaces of the accumulation conveyors 34, 36, 38 and 40 move, at a conveying speed that is slower than the feed conveying speed, in the direction of arrow 60. The conveying speed of the accumulation conveyors determine the rate at which the products leave the accumulation table 10 via the outlets 24 and 26.

More specifically, products, such as, for example, cans 70a, placed onto the feed conveyor 30 enter the accumulation table 10 via the inlet 22. These cans will eventually reach the guide 54 (see cans 70b).

Under the combined action of the feed conveyor 30, of the guide 54 and of other surrounding cans pushing them, cans (see cans 70c) will be pushed onto the accumulation conveyors 36 and 38 (see arrows 72).

With the accumulation of cans onto the feed conveyor 30 and onto the accumulation conveyors 36 and 38, the cans present onto the accumulation conveyors 36 and 38 will be, under the combined action of other surrounding cans and of the guide 54, pushed onto the feed conveyors 28 and 32 (see cans 70d and arrows 74).

Again, under the combined action of the feed conveyors 28 and 32, of the guide 54 and of other surrounding cans, some cans will be pushed onto the peripheral accumulation conveyors 34 and 40 (see cans 70e and arrows 76).

Under the unique combined influence of the feed conveyors 28 and 32, the cans present on the peripheral accumulation conveyors 34 and 40 are not transferred to the output conveyors 50, 52 via the outlets 24, 26. Indeed, the energy transferred to these cans by the surrounding cans is generally not sufficient to make them cross the entire width of the accumulation conveyors 34 and 40. Therefore, if the accumulation table 10 is in the above-mentioned accumulation mode, only a very small number of cans will be transferred to the output conveyors 50, 52. Of course, to ensure that no can exits the accumulation table 10, wider accumulation conveyors 34 and 40 could be used.

If the accumulation table is in its normal mode, the output rate of cans transferred to the output conveyors 50 and 52 (see cans 70f and arrows 78) is determined by the accumulation conveying speed of the accumulation conveyors 34, 36, 38 and 40.

As will be easily understood by one skilled in the art of conveyors, the pressure applied to the accumulated products, i.e. the accumulation pressure, depends on many parameters. The accumulation table of the present invention provides means to decrease this accumulation pressure by increasing the ratio of accumulation conveying width to feed conveying width. Indeed, if the accumulation conveying width increases with respect to the feed conveying width the pressure exerted onto each accumulated product will decrease since there is proportionally less power pushing the products. Of course, the ratio of accumulation conveying width to feed conveying width may not be increased to infinity. Indeed, if the width of the accumulation conveyors is disproportionate with respect to the width of the feed conveyors, the products will not be supplied with enough power to cross the accumulation conveyors.

It is to be noted however, that if the ratio of accumulation conveying width to feed conveying width increases, it will also generally increase the time required for products to reach the outlets 24, 26 and therefore increase the accumulating effect of the accumulation table 10, even when the table 10 is in its normal mode, which may or may not be a beneficial effect depending on the application.

It has been found that a ratio of accumulation conveying width to feed conveying width of about two (2) is generally adequate to provide a sufficiently low accumulation pressure for most common products. Of course, this ratio is given as a non limiting example.

It is therefore believed that the alternation of the feed conveyors and of the accumulation conveyors is advantageous since it allows accumulation of products while managing the pressure exerted onto each product.

It is to be noted that while the operation of the accumulation table 10 has been given hereinabove with respect to products having a circular cross-section, such as, for example, cans, bottles or conveyor pucks, the accumulation table 10 could also be used to accumulate products having non-circular cross sections, as long as there are no acute angle in the product. Indeed, as will be readily understood by one skilled in the art, if the product has acute angles, it will be prevented from freely rotating under the action of the conveyors and/or of the adjacent products, leading to an increase of pressure onto the products.

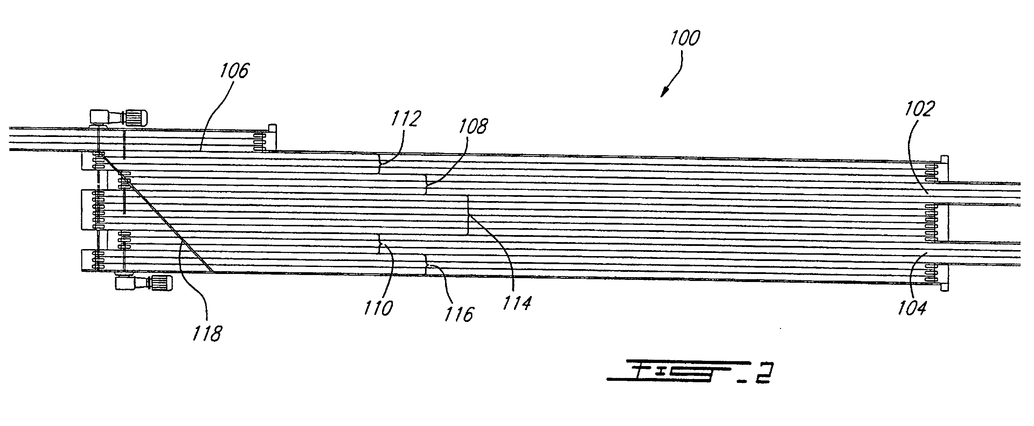

Turning now to Figure 2 of the appended drawings, a low pressure accumulation table 100 according to a second embodiment of the present invention will be described.

It is to be noted that since the accumulation table 100 is very similar to the accumulation table 10 described hereinabove, only the differences between these two tables will be described hereinbelow, for concision purposes.

The accumulation table 100 includes two inlets 102 and 104 and one outlet 106.

The table 100 includes two feed conveyors 108 and 110 and three accumulation conveyors 112, 114 and 116. The purpose and the operation of the conveyors 108- 116 are as described hereinabove with respect to table 10. It is to be noted however, that the central accumulation conveyor 114 is wider that the adjacent feed conveyors 108 and 110 since it receives products (not shown) from both feed conveyors.

An angled guide 118 is also provided to guide the products towards the outlet 106.

The accumulation table 100 may be advantageous in some cases since the products are brought to the accumulation table 100 from two individual machines.

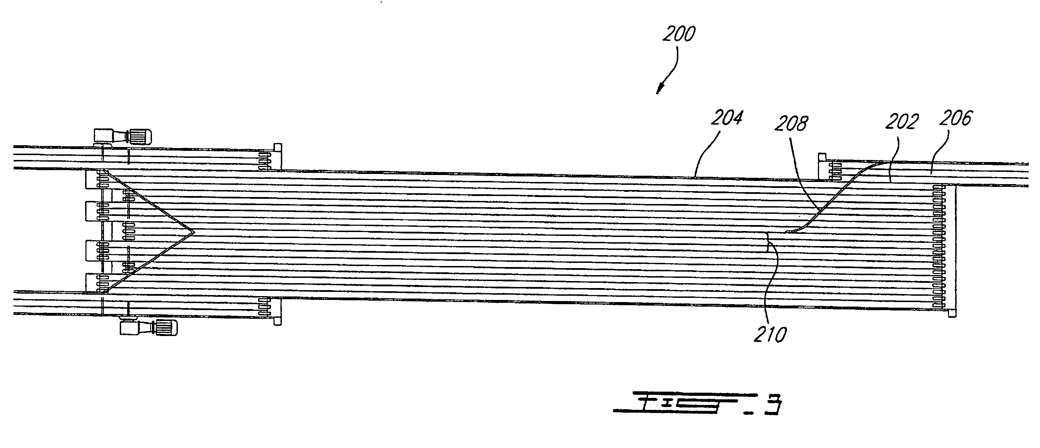

Turning now to Figure 3 of the appended drawings, a low pressure accumulation table 200 according to a third embodiment of the present invention will be described.

Again, since the accumulation table 200 is very similar to the accumulation table 10 described hereinabove, only the differences between these two tables will be described hereinbelow, for concision purposes.

The major difference between the table 200 and the table 10 concerns the inlet 202 that is provided at a side 204 of the table 200.

The products (not shown) are therefore conveyed to the inlet 202 via an input conveyor 206. A generally S-shaped guide 208 is provided to guide the products from the input conveyor 206 to the central feed conveyor 210.

The accumulation table 200 may be advantageous in some cases since the products are brought to the accumulation table 200 by an input conveyor 206 that is not part of the table 200.

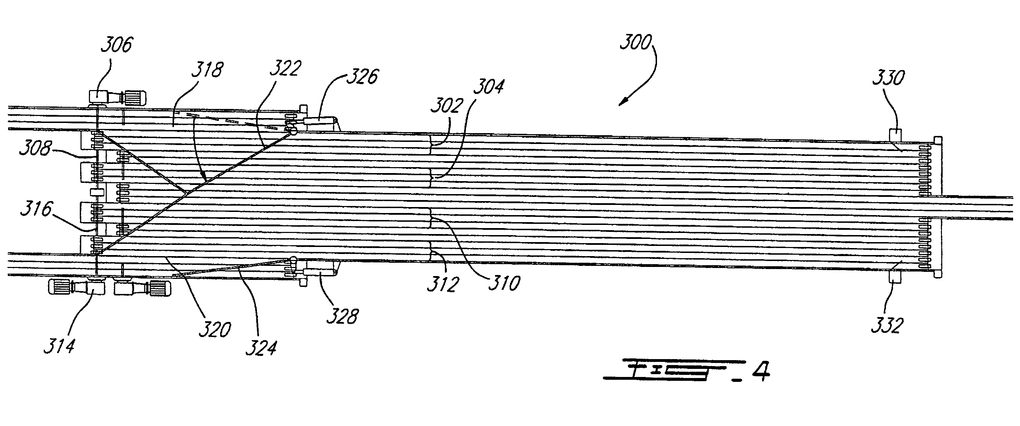

Turning now to Figure 4 of the appended drawings, a low pressure accumulation table 300 according to a fourth embodiment of the present invention will be described.

Yet again, since the accumulation table 300 is very similar to the accumulation table 10 described hereinabove, only the differences between these two tables will be described hereinbelow, for concision purposes.

Two major differences exist between the table 300 and the table 10.

The accumulation conveyors 302 and 304 are powered by a motor 306 via a first shaft 308. Similarly, the accumulation conveyors 310 and 312 are powered by a motor 314 via a second shaft 316.

This independent control of the accumulation conveyors allows the output rate of products (not shown) to be different for outlet 318 and for outlet 320, which is an advantage if the outlets 318 and 320 are connected to different machines.

Secondly, the accumulation table 300 is provided with two movable guides 322, 324 that may be pivoted between a retracted position (see guide 324) where they do not interfere with the products (not shown) and a guiding position (see guide 322) where they guide products away from one outlet and towards the other outlet. Of course, the movable guides 322, 324 are powered by respective pneumatic cylinders 326, 328 or by other similar actuators.

This feature is interesting since it allows the accumulation table 300 to be used even though one of the outlets has a zero output rate, for example, if it is malfunctioning.

It is to be noted that the accumulation table 300 is provided with two sensor 330, 332 provided near the first end of the accumulation table 300 to detect when it is full, indicating that the motor powering the feed conveyors should be stopped. Indeed, since the accumulation of products onto the table 300 may take place on only one side, depending on the respective speeds of the motors 306 and 314, a sensor is advantageously provided on each side of the table 300.

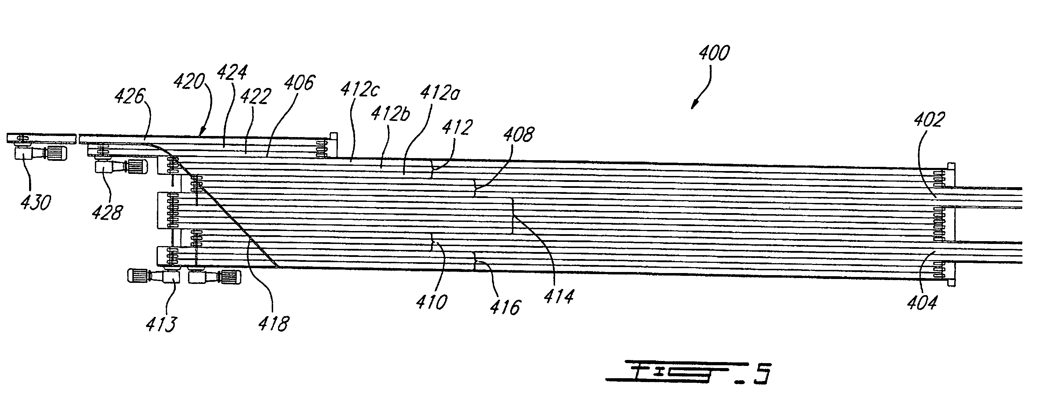

Turning now to Figure 5 of the appended drawings, a low pressure accumulation table 400 according to a fifth embodiment of the present invention will be described.

It is to be noted that since the accumulation table 400 is very similar to the accumulation table 10 described hereinabove, only the differences between these two tables will be described hereinbelow, for concision purposes.

The accumulation table 400 includes two inlets 402 and 404 and one outlet 406.

The table 400 includes two feed conveyors 408 and 410 and three accumulation conveyors 412, 414 and 416. The purpose and the operation of the conveyors 408 - 416 are as described hereinabove with respect to table 10. It is to be noted however, that the central accumulation conveyor 414 is wider than the adjacent feed conveyors 408 and 410 since it receives products (not shown) from both feed conveyors.

An angled guide 418 is also provided to guide the products towards the outlet 406.

A major difference between the table 400 and the other tables described hereinabove is that the accumulation conveyor 412 and the output conveyor 420 together define a pressureless single filer. Therefore, as will be understood by one skilled in the art, the accumulation conveyor 412 includes three chain conveyors 412a, 412b and 412c, each defining a conveying surface and driven at different speeds. More specifically, the speed of the conveyor 412c is greater than the speed of the conveyor 412b which is greater than the speed of the conveyor 412a.

Similarly, the output conveyor 420 includes three chain conveyors 422, 424 and 426, each defining a conveying surface and driven at different speeds. More specifically, the speed of the conveyor 426 is greater than the speed of the conveyor 424 which is greater than the speed of the conveyor 422 which is greater than the speed of the conveyor 412c of the accumulation conveyor 412.

The conveyors 412a, 412b, 412c, 422, 424 and 426 are therefore driven at different speeds that define a speed gradient increasing laterally and outwardly.

To obtain the speed differences described hereinabove, the conveyors 412a- 412c are driven by a single motor 413 via different speed modifying elements (not shown), such as, for example, sprockets of different diameters. The conveyors 422 and 424 are driven by a single motor 428, also via speed modifying elements (not shown), while the conveyor 426 is driven by a single motor 430.

It is to be noted that the number of chain conveyors forming the output conveyor 420 is shown herein as a non limiting example. Furthermore, the chain conveyors could be replaced by other types of conveying surfaces.

The accumulation table 400 may be advantageous in some cases since the products are brought to the accumulation table 400 from two individual machines and must exit in a single file.

As will be easily understood by one skilled in the art, the various features of the accumulation tables 10, 100, 200, 300 and 400 described hereinabove have been given as illustrations only to show some of the possible configurations of accumulation tables according to the present invention. These features were therefore given as examples only and are not limitating in any way.

Although the present invention has been described hereinabove by way of preferred embodiments thereof, it can be modified, without departing from the spirit and nature of the subject invention as defined in the appended claims.

## Claims

1. A low pressure accumulation table for accumulating products; said accumulation table (10) comprising:
a frame (12) having a first end (14), a second end (16) and two opposite lateral sides (18, 20);
an inlet (22) provided at said first end (16) of said frame (12);
an outlet (24, 26) provided at said second end (16) of said frame (12);
at least one feed conveyor (28, 30, 32) so mounted to said frame (12) as to convey products from said first end (14) towards said second end (16) of said frame (12); said at least one feed conveyor (28, 30, 32) having a predetermined feed conveying speed;
at least two accumulation conveyors (34, 36, 38, 40) mounted to said frame (12); said at least one feed conveyor (28, 30, 32) and said at least two accumulation conveyors (34, 36, 38, 40) defining an accumulation surface; said at least two accumulation conveyors (34, 36, 38, 40) having a variable accumulation conveying speed that is slower than said predetermined feed conveying speed;
wherein (a) said at least one feed conveyor (28, 30, 32) and said at least two accumulation conveyors (34, 36, 38, 40) are so mounted side by side that said at least one feed conveyor (28, 30, 32) alternate with said at least two accumulation conveyors (34, 36, 38, 40); and (b) said at least two accumulation conveyors (34, 36, 38, 40), when energized, convey the products from said accumulation surface towards said outlet (24, 26) at a rate which is a function of the variable accumulation conveying speed of said at least two accumulation conveyors (34, 36, 38, 40).

2. A low pressure accumulation table as recited in claim 1, wherein said inlet is provided at about the same distance between said two opposite lateral sides (18, 20).

3. A low pressure accumulation table as recited in claim 1, wherein said inlet (22) is provided near one of said two opposite lateral sides (18, 20), said accumulation table (10) further including an inlet guide configured and sized to laterally guide the products towards the center of the accumulation surface.

4. A low pressure accumulation table as recited in claim 3, further comprising an input conveyor (206) conveying products towards said inlet.

5. A low pressure accumulation table as recited in claim 1, wherein said inlet includes first and second inlets (102, 104).

6. A low pressure accumulation table as recited in claim 1, wherein said outlet (24, 26) is provided near one of said two opposite sides (18, 20).

7. A low pressure accumulation table as recited in claim 6, further comprising an output conveyor (50, 52) conveying products away from said outlet.

8. A low pressure accumulation table as recited in claim 6, further comprising an angled guide (54) so mounted to said second end (16) of said frame (12) as to guide products from said accumulation surface to said outlet (24, 26).

9. A low pressure accumulation table as recited in claim 6, wherein one of said at least two accumulation conveyor (34, 36, 38, 40) is provided near said outlet (24, 26); said one of said at least two accumulation conveyor (34, 36, 38, 40) including at least two conveying surfaces; said output conveyor (50, 52) including at least two conveying surfaces; said at least two conveying surfaces of said accumulation conveyor (34, 36, 38, 40) and said at least two conveying surfaces of said output conveyor (50, 52) being driven at different conveying speeds defining a speed gradient increasing laterally and outwardly.

10. A low pressure accumulation table as recited in claim 1, wherein said outlet (24, 26) includes first and second outlets (24, 26).

11. A low pressure accumulation table as recited in claim 10, wherein said first outlet (24) is provided near one of said two opposite lateral sides (18, 20) and wherein said second outlet (26) is provided near the other of said two opposite lateral sides (18, 20).

12. A low pressure accumulation table as recited in claim 11, further comprising a first output conveyor (50) conveying products away from said first outlet (24) and a second output conveyor (52) conveying products away from said second outlet (24).

13. A low pressure accumulation table as recited in claim 11, further comprising a generally triangular guide (54) so mounted to said second end (16) of said frame (12) as to guide products from said accumulation surface to said first and second outlets (24, 26).

14. A low pressure accumulation table as recited in claim 11, further comprising a first movable guide (322) that is pivotable from a non guiding position to a guiding position where it guides products away from said first outlet (24) and towards said second outlet (26).

15. A low pressure accumulation table as recited in claim 14, further comprising a second movable guide (324) that is pivotable from a non guiding position to a guiding position where it guides products away from said second outlet (26) and towards said first outlet (24).

16. A low pressure accumulation table as recited in claim 11, wherein at least one of said at least two accumulation conveyors (34, 36, 38, 40) is powered by a first motor and wherein at least one of said at least two accumulation conveyors (34, 36, 38, 40) is powered by a second motor; said first and second motors being controlled independently.

17. A low pressure accumulation table as recited in claim 1, wherein (a) said at least one feed conveyor (28, 30, 32) have a combined feed conveying width; (b) said at least two accumulation conveyors (34, 36, 38, 40) have a combined accumulation conveying width and (c) said accumulation conveying width is about twice the size of said feed conveying width.

18. A low pressure accumulation table as recited in claim 1, wherein (a) said at least one feed conveyor (28, 30, 32) include at least two feed conveyors having a predetermined conveying width; (b) said at least two accumulation conveyors (34, 36, 38, 40) include at least three accumulation conveyor; (c) accumulating conveyors provided between two feed conveyors have a conveying width about twice the size of said predetermined conveying width of said at least two feed conveyors; and (d) accumulating conveyors (34, 36, 38, 40) not provided between two feed conveyors (28, 30, 32) have a conveying width about the size of said predetermined conveying width of said at least two feed conveyors.

## Patentansprüche

1. Niederdruck-Ansammlungstisch zum Ansammeln von Produkten, wobei der genannte Ansammlungstisch (10) folgendes umfaßt:
einen Rahmen (12), der ein erstes Ende (14), ein zweites Ende (16) und zwei gegenüberliegende seitliche Seiten (18, 20) aufweist;
einen am genannten ersten Ende (14) des genannten Rahmens (12) vorgesehenen Einlaß (22);
einen am genannten zweiten Ende (16) des genannten Rahmens (12) vorgesehenen Auslaß (24, 26) ;
wenigstens einen Zuförderer (28, 30, 32), der derart auf dem genannten Rahmen (12) montiert ist, daß die Produkte vom genannten ersten Ende (14) zum genannten zweiten Ende (16) des genannten Rahmens (12) gefördert werden ; wobei der genannte wenigstens eine Zuförderer (28, 30, 32) eine vorbestimmte Zufördergeschwindigkeit hat;
wenigstens zwei auf dem genannten Rahmen (12) montierte Ansammlungsförderer (34, 36, 38, 40) ; wobei der genannte wenigstens eine Zuförderer (28, 30, 32) und die genannten wenigstens zwei Ansammlungsförderer (34, 36, 38, 40) eine Ansammlungsfläche definieren ; wobei die genannten wenigstens zwei Ansammlungsförderer (34, 36, 38, 40) eine änderliche Ansammlungsfördergeschwindigkeit haben, die niedriger ist als die genannte vorbestimmte Zufördergeschwindigkeit ;
bei dem (a) der genannte wenigstens eine Zuförderer (28, 30, 32) und die genannten wenigstens zwei Ansammlungsförderer (34, 36, 38, 40) neben einander montiert sind, derart, daß der genannte wenigstens eine Zuförderer (28, 30, 32) und die genannten wenigstens zwei Ansammlungsförderern (34, 36, 38, 40) wechselweise arbeiten; und (b) die genannten wenigstens zwei Ansammlungsförderer (34, 36, 38, 40), wenn sie eingeschaltet sind, die Produkte mit einer von der änderlichen Ansammlungsfördergeschwindigkeit der genannten wenigstens zwei Ansammlungsförderer (34, 36, 38, 40) abhängigen Geschwindigkeit von der genannten Ansammlungsfläche zum genannten Auslaß (24, 26) befördern.

2. Niederdruck-Ansammlungstisch nach Anspruch 1, bei dem der genannte Einlaß etwa auf gleichem Abstand von den zwei gegenüberliegenden seitlichen Seiten (18, 20) vorgesehen ist.

3. Niederdruck-Ansammlungstisch nach Anspruch 1, bei dem der genannte Einlaß (22) in der Nähe einer der zwei gegenüberliegenden seitlichen Seiten (18, 20) vorgesehen ist, wobei der genannte Ansammlungstisch (10) weiterhin eine Einlaßführungsschiene umfaßt, die derart konfiguriert und bemessen ist, daß sie die Produkte seitlich zur Mitte der Ansammlungsfläche hin führt.

4. Niederdruck-Ansammlungstisch nach Anspruch 3, umfassend weiterhin einen Zuförderer (206), der die Produkte zum genannten Einlaß befördert.

5. Niederdruck-Ansammlungstisch nach Anspruch 1, bei dem der genannte Einlaß einen ersten und einen zweiten Einlaß (102, 104) umfaßt.

6. Niederdruck-Ansammlungstisch nach Anspruch 1, bei dem der genannte Auslaß in der Nähe einer der zwei gegenüberliegenden seitlichen Seiten (18, 20) vorgesehen ist.

7. Niederdruck-Ansammlungstisch nach Anspruch 6, umfassend weiterhin einen Abförderer (50, 52), der die Produkte vom genannten Auslaß entfernt befördert.

8. Niederdruck-Ansammlungstisch nach Anspruch 6, umfassend weiterhin eine Winkelführungsschiene (54), die derart auf dem genannten zweiten Ende (16) des genannten Rahmens (12) montiert ist, daß die Produkte von der genannten Ansammlungsfläche zum genannten Auslaß (24, 26) geführt werden.

9. Niederdruck-Ansammlungstisch nach Anspruch 6, bei dem einer der genannten wenigstens zwei Ansammlungsförderer (34, 36, 38, 40) in der Nähe des genannten Auslaßes (24, 26) vorgesehen ist ; wobei der genannte eine der wenigstens zwei Ansammlungsförderer (34, 36, 38, 40) wenigstens zwei Beförderungsflächen umfaßt ; wobei die wenigstens zwei Beförderungsflächen des genannten Ansammlungsförderers (34, 36, 38, 40) und die genannten wenigstens zwei Beförderungsflächen des genannten Abförderers (50, 52) mit unterschiedlichen Fördergeschwindigkeiten angetrieben werden, die einen seitlich und nach außen ansteigenden Geschwindigkeitsgradienten definieren.

10. Niederdruck-Ansammlungstisch nach Anspruch 1, bei dem der genannte Auslaß (24, 26) einen ersten und einen zweiten Auslaß (24, 26) umfaßt.

11. Niederdruck-Ansammlungstisch nach Anspruch 10, bei dem der genannte erste Auslaß in der Nähe einer der genannten zwei gegenüberliegenden seitlichen Seiten (18, 20) vorgesehen ist und bei dem der genannte zweite Auslaß in der Nähe der anderen der genannten zwei gegenüberliegenden seitlichen Seiten (18, 20) vorgesehen ist.

12. Niederdruck-Ansammlungstisch nach Anspruch 11, umfassend weiterhin einen ersten Abförderer (50), der die Produkte vom genannten ersten Auslaß (24) entfernt befördert, und einen zweiten Abförderer (52), der die Produkte vom genannten zweiten Auslaß (26) entfernt befördert.

13. Niederdruck-Ansammlungstisch nach Anspruch 11, umfassend weiterhin eine im allgemeinen dreieckige Führungsschiene (54), die derart auf dem genannten zweiten Ende (16) des genannten Rahmens (12) montiert ist, daß die Produkte von der genannten Ansammlungsfläche zu den genannten ersten und zweiten Ausläßen (24, 26) geführt werden.

14. Niederdruck-Ansammlungstisch nach Anspruch 11, umfassend weiterhin eine erste bewegliche Führungsschiene (322), die von einer Nichtführungsposition in eine Führungsposition schwenkbar ist, in der sie die Produkte vom genannten ersten Auslaß (24) entfernt zum genannten zweiten Auslaß (26) hin führt.

15. Niederdruck-Ansammlungstisch nach Anspruch 14, umfassend weiterhin eine zweite bewegliche Führungsschiene (324), die von einer Nichtführungsposition in eine Führungsposition schwenkbar ist, in der sie die Produkte vom genannten zweiten Auslaß (26) entfernt zum genannten ersten Auslaß (24) hin führt.

16. Niederdruck-Ansammlungstisch nach Anspruch 11, bei dem wenigstens einer der genannten wenigstens zwei Ansammlungsförderer (34, 36, 38, 40) von einem ersten Motor angetrieben wird und bei dem wenigstens einer der genannten wenigstens zwei Ansammlungsförderer (34, 36, 38, 40) von einem zweiten Motor angetrieben wird, wobei die genannten ersten und zweiten Motoren unabhängig gesteuert werden.

17. Niederdruck-Ansammlungstisch nach Anspruch 1, bei dem (a) der genannte wenigstens eine Zuförderer (28, 30, 32) eine kombinierte Zuförderbreite aufweist; (b) die genannten wenigstens zwei Ansammlungsförderer (34, 36, 38, 40) eine kombinierte Ansammlungsbreite aufweisen, und (c) die genannte Ansammlungsförderbreite etwa gleich der 2-fachen Abmessung der gennanten Zuförderbreite ist.

18. Niederdruck-Ansammlungstisch nach Anspruch 1, bei dem (a) der genannte wenigstens eine Zuförderer (28, 30, 32) wenigstens zwei Zuförderer umfaßt, die eine vorbestimmte Förderbreite aufweisen; (b) die genannten wenigstens zwei Ansammlungsförderer (34, 36, 38, 40) wenigstens drei Ansammlungsförderer umfassen ; (c) die zwischen zwei Zuförderern vorgesehenen Ansammlungsförderer eine Förderbreite etwa gleich der 2-fachen Abmessung der genannten vorbestimmten Förderbreite der genannten wenigstens zwei Zuförderer aufweisen; und (d) die nicht zwischen zwei Zuförderern (28, 30, 32) vorgesehenen Ansammlungsförderer (34, 36, 38, 40) eine Förderbreite etwa gleich der Abmessung der genannten vorbestimmten Förderbreite der genannten wenigstens zwei Zuförderer aufweisen.

## Revendications

1. Table d'accumulation basse pression destinée à accumuler des produits, ladite table d'accumulation (10) comprenant :
un châssis (12) présentant une première extrémité (14), une seconde extrémité (16) et deux côtés latéraux opposés (18, 20) ;
une entrée (22) prévue à ladite première extrémité (14) dudit châssis (12) ;
une sortie (24, 26) prévue à ladite seconde extrémité (16) dudit châssis (12) ;
au moins un convoyeur d'alimentation (28, 30, 32) monté sur ledit châssis (12) de manière à acheminer les produits de ladite première extrémité (14) vers ladite seconde extrémité (16) dudit châssis (12) ; ledit au moins un convoyeur d'alimentation (28, 30, 32) ayant une vitesse d'acheminement d'alimentation prédéterminée ;
au moins deux convoyeurs d'accumulation (34, 36, 38, 40) montés sur ledit châssis (12) ; ledit au moins un convoyeur d'alimentation (28, 30, 32) et lesdits au moins deux convoyeurs d'accumulation (34, 36, 38, 40) définissant une surface d'accumulation ; lesdits au moins deux convoyeurs d'accumulation (34, 36, 38, 40) ayant une vitesse d'acheminement d'accumulation variable qui est inférieure à ladite vitesse d'acheminement d'alimentation prédéterminée ;
dans laquelle (a) ledit au moins un convoyeur d'alimentation (28, 30, 32) et lesdits au moins deux convoyeurs d'accumulation (34, 36, 38, 40) sont montés côte à côte de sorte que ledit au moins un convoyeur d'alimentation (28, 30, 32) fonctionne en alternance avec lesdits au moins deux convoyeurs d'accumulation (34, 36, 38, 40) ; et (b) lesdits au moins deux convoyeurs d'accumulation (34, 36, 38, 40), lorsqu'ils sont activés, acheminent les produits de ladite surface d'accumulation vers ladite sortie (24, 26) à une vitesse qui est fonction de la vitesse d'acheminement d'accumulation variable desdits au moins deux convoyeurs d'accumulation (34, 36, 38, 40).

2. Table d'accumulation basse pression selon la revendication 1, dans laquelle ladite entrée est prévue environ équidistante des deux côtés latéraux opposés (18, 20).

3. Table d'accumulation basse pression selon la revendication 1, dans laquelle ladite entrée (22) est prévue près de l'un des deux côtés latéraux opposés (18, 20), ladite table d'accumulation (10) comportant, par ailleurs, un guide d'entrée configuré et dimensionné de manière à guider les produits latéralement vers le centre de la surface d'accumulation.

4. Table d'accumulation basse pression selon la revendication 3, comprenant, par ailleurs, un convoyeur d'entrée (206) acheminant les produits vers ladite entrée.

5. Table d'accumulation basse pression selon la revendication 1, dans laquelle ladite entrée comporte une première et une seconde entrée (102, 104).

6. Table d'accumulation basse pression selon la revendication 1, dans laquelle ladite sortie est prévue près de l'un des deux côtés latéraux opposés (18, 20).

7. Table d'accumulation basse pression selon la revendication 6, comprenant, par ailleurs, un convoyeur de sortie (50, 52) acheminant les produits en s'éloignant de ladite sortie.

8. Table d'accumulation basse pression selon la revendication 6, comprenant, par ailleurs, un guide d'angle (54) monté sur ladite seconde extrémité (16) dudit châssis (12) de manière à guider les produits de ladite surface d'accumulation vers ladite sortie (24, 26).

9. Table d'accumulation basse pression selon la revendication 6, dans laquelle l'un desdits au moins deux convoyeurs d'accumulation (34, 36, 38, 40) est prévu près de ladite sortie (24, 26) ; ledit un desdits au moins deux convoyeurs d'accumulation (34, 36, 38, 40) comportant au moins deux surfaces d'acheminement ; lesdites au moins deux surfaces d'acheminement dudit convoyeur d'accumulation (34, 36, 38, 40) et lesdites au moins deux surfaces d'acheminement dudit convoyeur de sortie (50, 52) étant entraînées à des vitesses d'acheminement différentes définissant un gradient de vitesse augmentant latéralement et vers l'extérieur.

10. Table d'accumulation basse pression selon la revendication 1, dans laquelle ladite sortie (24, 26) comporte une première et une seconde sortie (24, 26).

11. Table d'accumulation basse pression selon la revendication 10, dans laquelle ladite première sortie est prévue près de l'un desdits deux côtés latéraux opposés (18, 20) et dans laquelle ladite seconde sortie est prévue près de l'autre desdits deux côtés latéraux opposés (18, 20).

12. Table d'accumulation basse pression selon la revendication 11, comprenant, par ailleurs, un premier convoyeur de sortie (50) acheminant les produits en s'éloignant de ladite première sortie (24) et un second convoyeur de sortie (52) acheminant les produits en s'éloignant de ladite seconde sortie (26).

13. Table d'accumulation basse pression selon la revendication 11, comprenant, par ailleurs, un guide (54) généralement triangulaire monté sur ladite seconde extrémité (16) dudit châssis (12) de manière à guider les produits de ladite surface d'accumulation vers lesdites première et seconde sorties (24, 26).

14. Table d'accumulation basse pression selon la revendication 11, comprenant, par ailleurs, un premier guide mobile (322) pivotable d'une position de non-guidage en une position de guidage dans laquelle il guide les produits en s'éloignant de ladite première sortie (24), vers ladite seconde sortie (26).

15. Table d'accumulation basse pression selon la revendication 14, comprenant, par ailleurs, un second guide mobile (324) pivotable d'une position de non-guidage en une position de guidage dans laquelle il guide les produits en s'éloignant de ladite seconde sortie (26), vers ladite première sortie (24).

16. Table d'accumulation basse pression selon la revendication 11, dans laquelle au moins l'un desdits au moins deux convoyeurs d'accumulation (34, 36, 38, 40) est entraîné par un premier moteur et dans laquelle au moins l'un desdits au moins deux convoyeurs d'accumulation (34, 36, 38, 40) est entraîné par un second moteur, lesdits premier et second moteurs étant commandés indépendamment.

17. Table d'accumulation basse pression selon la revendication 1, dans laquelle (a) ledit au moins un convoyeur d'alimentation (28, 30, 32) présente une largeur d'acheminement d'alimentation combinée ; (b) lesdits au moins deux convoyeurs d'accumulation (34, 36, 38, 40) présentent une largeur d'accumulation combinée, et (c) ladite largeur d'acheminement d'accumulation est d'environ deux fois la dimension de ladite largeur d'acheminement d'alimentation.

18. Table d'accumulation basse pression selon la revendication 1, dans laquelle (a) ledit au moins un convoyeur d'alimentation (28, 30, 32) comporte au moins deux convoyeurs d'alimentation présentant une largeur d'acheminement prédéterminée ; (b) lesdits au moins deux convoyeurs d'accumulation (34, 36, 38, 40) comportent au moins trois convoyeurs d'accumulation ; (c) les convoyeurs d'accumulation prévus entre deux convoyeurs d'alimentation présentent une largeur d'acheminement d'environ deux fois la dimension de ladite largeur d'acheminement prédéterminée desdits au moins deux convoyeurs d'alimentation ; et (d) les convoyeurs d'accumulation (34, 36, 38, 40) non prévus entre deux convoyeurs d'alimentation (28, 30, 32) présentent une largeur d'acheminement d'environ la dimension de ladite largeur d'acheminement prédéterminée desdits au moins deux convoyeurs d'alimentation.
